# EUROPEAN PATENT APPLICATION

(11) **EP 0 846 891 A1**
(43) Date of publication of application: **10.06.1998**
(21) Application number: 97309578.9
(22) Date of filing: 27.11.1997
(51) Int. Cl.: F16H 7/08

(54) **Hydraulic tensioner with plastic body and piston**

(30) Priority: 05.12.1996 US 760267
(71) Applicant: BORG-WARNER AUTOMOTIVE, INC., Sterling Heights, Michigan 48311-8022 (US)
(72) Inventor: Simpson, Roger T., Ithaca, N.Y. 14850 (US)
(74) Representative: Lerwill, John

(57) **Abstract**

A plastic material body hydraulic tensioner (10) with a plastic sealing element (40) to provide fluid leakage from a fluid filled chamber (52). The sealing element eliminates the need to precisely control manufacturing tolerances between the piston (56) and the bore (48). The tensioner body (50), piston and sealing element may each be manufactured from plastic materials through an injection molding process.

## Description

### BACKGROUND OF THE INVENTION

The present invention relates to a hydraulic tensioner which includes a fluid chamber and a hollow piston slidably received within the chamber. More particularly, the present invention relates to a hydraulic tensioner in which either or both the housing and piston are made of plastic. Additionally, a plastic material sealing element may be positioned between the piston and a bore (the inner lateral wall of the fluid chamber) to provide controlled fluid leakage from the fluid chamber. The present invention uses a sealing element to control fluid leakage from the chamber which avoids the need for precise manufacture of the clearance for fluid leakage between the piston and the bore. Thus, the piston and the tensioner body can be readily manufactured through an injection molding process from plastic materials.

Tensioning devices, such as hydraulic tensioners, are used as a control device for automotive timing drives. An automotive timing drive includes either a chain or belt which travels between a plurality of sprockets or pulleys. The tension of the chain can vary greatly on the slack side of the chain as the chain travels between the sprockets. Likewise, the tension of the chain can further vary as the chain stretches due to wear. As a result, it is important to impart and maintain a certain degree of tension to the chain to maintain control over the chain as it travels between the sprockets. In addition, as the chain tension lessens due to wear, it is important to provide an adjustable, tensioning member to maintain the proper tension of the chain.

In an automotive application, the piston must be able to withdraw back into the tensioner after the automobile engine has run at high speeds. In order for the piston to withdraw back into the chamber of the body of the tensioner, fluid from the chamber must be able to leak from the chamber to outside of the tensioner body.

Presently tensioners have to be precisely manufactured to control the fluid leakage from the chamber. In particular, fluid leakage from the chamber occurs through the clearance between the piston and the bore. During the tensioner assembly process, the piston and the bore are first manufactured to certain tolerances. It is, however, difficult to maintain the close manufacturing tolerances needed to fit the piston to the bore. Thus, at the present time, during assembly, many pistons are fitted with a particular bore. The piston with the outer diameter that most closely matches the inner diameter of the bore is the piston that is selected for assembly with that particular tensioner. With a sealing element, this matching process during assembly body is eliminated because the sealing element fills the clearance between the piston and the chamber. The sealing element fills this clearance except for a discontinuity, or gap, in the sealing element. This gap permits a set amount of fluid leakage from the chamber, and thus allows the piston to withdraw back into the tensioner.

Hydraulic tensioners known in the art typically do not include a sealing element or they include a sealing element that provides a fluid tight chamber.

One example of a hydraulic tensioner with a sealing element is described in Sosson, U.S. Patent No. 4,850,941. Sosson discloses a hydraulic tensioner, which includes a piston with a groove on its outer surface for receiving a sealing element between the groove and the lateral wall of the chamber. The sealing element has lips adapted to provide a seal between the groove, i.e., the outer surface of the piston, and the lateral wall of the chamber. The chamber becomes closed and sealed owing to the presence of the sealing element. The chamber is therefore fluid tight, and leakage from the chamber is prevented. The commercial embodiment of this tensioner is believed to have a plastic tensioner body.

Another example of a hydraulic tensioner which includes a sealing element is described in Wahl, U.S. Patent No. 4,190,025. Wahl discloses a hydraulic tensioner, which includes an annular oil retainer piston with circumferential grooves for receiving inner and outer O-ring seals for sealingly engaging a plunger and the lateral wall of the chamber. The O-ring seals of Wahl provide a fluid tight chamber, and therefore leakage from the chamber is prevented.

In contrast, one example of a hydraulic tensioner which includes a sealing element to control fluid leakage is U.S. Application Serial No. 08/569,934, filed December 8, 1995, entitled "Hydraulic Tensioner With Sealing Element," which is owned by the assignee of the present application and is incorporated herein by reference. This application discloses a sealing element to permit controlled fluid leakage from the chamber. As with the present invention, fluid flow out of the chamber is limited and controlled by regulation of the size of a discontinuity, i.e., a space or gap, in the sealing element.

As a result of using a sealing element, and thus having broader manufacturing parameters, the tensioner and its components may be manufactured through an injection molding process from plastic materials. In particular, the tensioner body, the piston and the sealing element may each be manufactured through an injection molding process from plastic materials.

### SUMMARY OF THE INVENTION

The present invention is directed to a hydraulic tensioner having a sealing element to provide controlled fluid leakage from the fluid chamber such that the piston, the sealing element and the tensioner body can each be manufactured of plastic through an injection molding process. The tensioner includes a housing having a hollow bore, and a hollow piston slidably received within the bore and biased in a protruding direction by a spring. A fluid chamber is defined by the bore and the piston. The chamber contains fluid of sufficient amount to bias the piston outward. The piston has an upper end which is positioned above the fluid chamber. The piston has a lower end which is located within the fluid chamber. A sealing element is positioned between the piston and the bore (the inner lateral wall of the chamber) between the upper and lower ends of the piston. The sealing element is discontinuous, i.e., there is a space or gap in the sealing element, which allows for the passage of fluid. Therefore, fluid from the fluid chamber is allowed to leak, or pass through, the discontinuity of the sealing element out of the chamber, along the outside of the piston, to outside of the tensioner.

The piston of a hydraulic tensioner must be able to extend outward as the chain moves and stretches with the increased loads from higher engine speeds. The piston is forced outward by the force of fluid pressure and the spring against the top of the piston. The piston is forced inward by the force of the chain against a tensioner arm or face at the top of the piston. The distance of outward travel of the piston is dependent on the balance of the hydraulic and spring forces outward against the chain force inward. Additionally, fluid may exit the chamber from around the piston. The fluid flow out of the chamber around the piston is dependent on certain factors such as: piston diameter; bore or chamber diameter; piston to chamber clearance; the duration, magnitude and duty cycle of force pushing the piston down; the viscosity of the fluid; fluid flow back through the check valve due to check valve response; and the amount of air bleed through the air vents.

Fluid leakage from the chamber effects tensioner performance. It should be apparent that fluid leakage varies according to the piston to chamber clearance. Given a chamber of a particular inner diameter, a piston with a smaller outer diameter will have greater leakage from that chamber because of the greater area for leakage between the piston outer diameter and the chamber inner diameter. Likewise, a piston with a larger outer diameter will have less leakage from that chamber because of the smaller area for leakage between the piston outer diameter and the chamber inner diameter. The sealing element of the present invention provides a matched piston and bore (as a result of the seal) and controls the amount of leakage past the piston.

Additional fluid leakage may occur through the sealing element even when no fluid pressure is present. As the piston retracts due to gravitational forces, fluid in the chamber will be forced out through the opening in the sealing element. Because less fluid will then be present in the chamber, the piston can retract even further, again allowing fluid to exit the chamber through the gap in the sealing element.

The discontinuity of the sealing element is dependent on the chamber diameter and oil temperature. Because the discontinuity is dependent on those two factors, the range of leakage from the tensioner can be readily controlled. The required leakage flow can also be more closely matched to the desired performance of the tensioner.

Because the sealing element fills the clearance between the piston and the bore, the sealing element allows for greater tolerances to be present between the piston and the bore when manufacturing the piston and the bore. Thus, the piston and the tensioner body, as well as the sealing element, can each be manufactured through an injection molding process.

Generally, in injection molding, a plastic material is melted and then injected into a mold cavity. Once the melted plastic is in the mold, it cools to a shape that reflects the cavity. An injection molding unit basically has two parts, one for melting and transferring the melted plastic to the mold, and a second for holding the mold shut against injection pressure and for removing the finished mold after cooling is completed.

The piston should be manufactured from a plastic material that has good strength properties. Preferably, the piston is comprised of commercially available glass filled nylon 4/6. The sealing element should be manufactured from a plastic material that has good flexibility and wear characteristics. Preferably, the sealing element is comprised of a commercially available ketone-based resin such as polyetheretherketone (PEEK). The housing or tensioner body should be manufactured from a plastic material that has good strength and wear properties. Preferably, the tensioner body is comprised of polyphenylene sulfide (PPS) with glass and mineral fillers. Blends of PPS are commercially available.

The sealing element can be positioned onto the plastic piston, between the piston and the bore, in several ways. The sealing element may be injection molded separately from the plastic piston, and then placed onto a groove which is injection molded into the plastic piston during assembly of the tensioner. The sealing element may also be first injection molded separately from the plastic piston, and then molded onto a groove which is injection molded into the plastic piston. In addition, the sealing element may be injection molded with the plastic piston.

In addition to simplifying the manufacture of a tensioner by using an injection molding process, the costs of manufacturing a tensioner are decreased because the tensioner body may be entirely made from a plastic material with no metal insert in the bore.

### BRIEF DESCRIPTION OF THE DRAWINGS

FIG. **1** is a schematic illustrating a timing chain system with dual overhead camshafts and a camshaft-to-camshaft drive system;
FIG. **2** is a perspective view of a hydraulic tensioner with piston and sealing element, all manufactured from plastic material;
FIG. **3** is a perspective view of the hydraulic tensioner of FIG. **2**;
FIG. **4** is a sectional view of a hydraulic tensioner of the present invention;
FIG. **5** is one embodiment of a plastic piston and sealing element of a hydraulic tensioner element of the present invention;
FIG. **6** is another embodiment of a plastic piston and sealing element of the present invention; and
FIG. **7** is yet another embodiment of a plastic piston and sealing element of the present invention.

### DETAILED DESCRIPTION OF THE PRESENTLY PREFERRED EMBODIMENTS

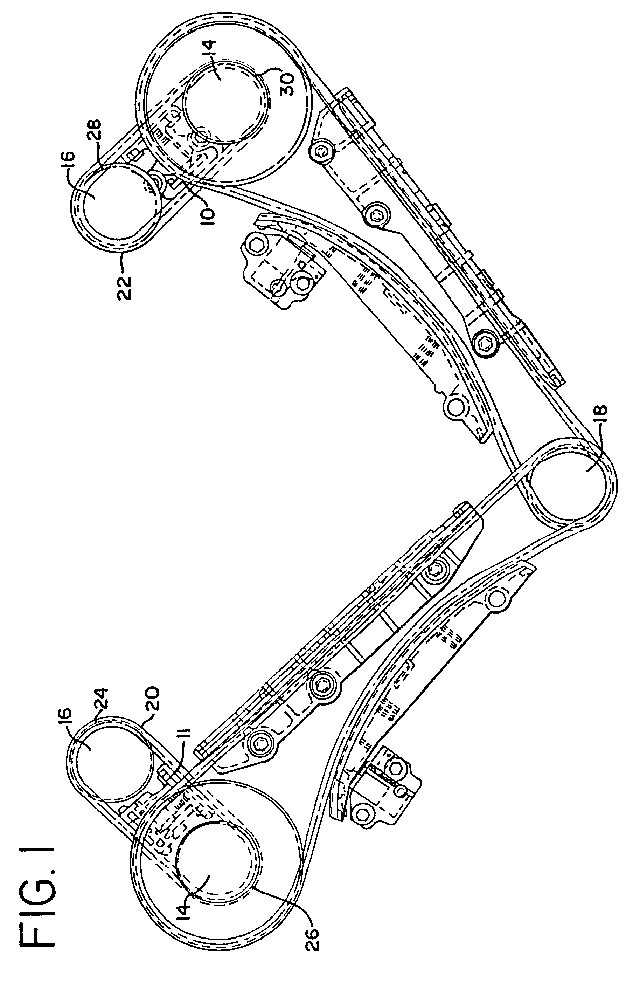

Turning now to the drawings, FIG. 1 illustrates two hydraulic tensioners 10, 11 positioned in opposite directions in a timing chain system with dual overhead camshafts 14, 16 and a camshaft to camshaft drive system to drive a crankshaft 18. Chains 20, 22 are wrapped about sprockets 24, 26, 28 and 30 of the camshafts and the tensioners 10, 11 are provided to maintain chain tension in the cam-to-cam drive chain.

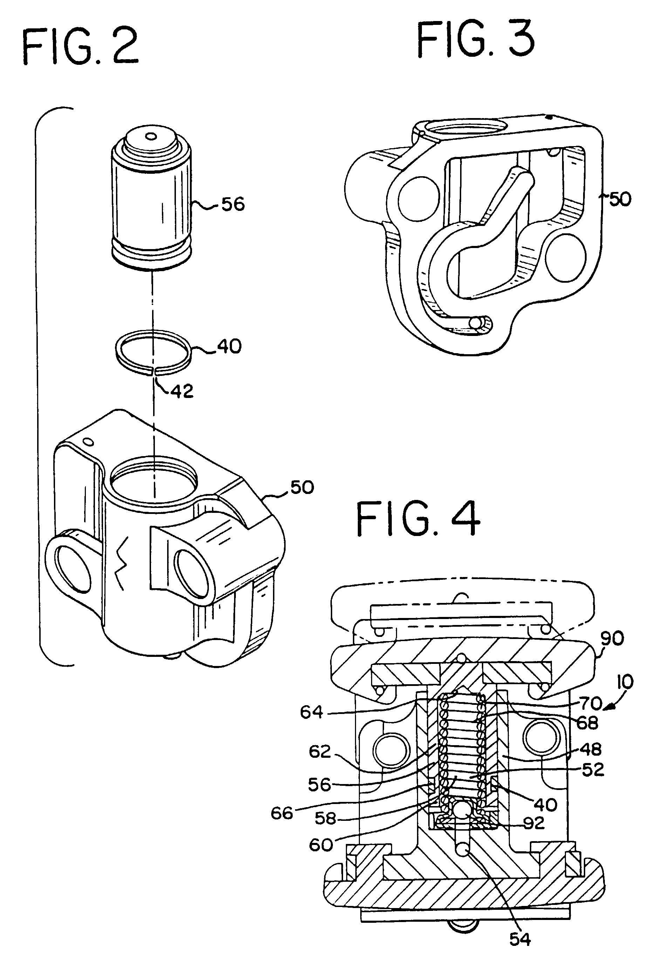

Referring more particularly to FIGS. 2 and 3, a hydraulic tensioner 10 (or 11) of FIG. 1 is illustrated. Because of the use of a sealing element 40 to control fluid leakage and to fill the clearance between the piston and the bore, the tensioner body, or housing 50, is comprised of a plastic material formed through an injection molding process. In addition, the piston 56 and the sealing element 40 each is comprised of a plastic material formed through an injection molding process. Suitable plastic material for the tensioner housing 50 is a plastic which is optimized to maximize the strength of the housing 50, and to minimize the wear between the plastic piston 56 and the plastic housing 50. Preferably, the housing 50 is comprised of polyphenylene sulfide (PPS) with glass and mineral fillers. Suitable plastic material for the piston 56 is a plastic which is optimized for strength. Preferably, the piston 56 is comprised of glass filled nylon 4/6. Suitable plastic material for the sealing element 40 is a plastic which is optimized for flexibility and wear. Preferably, the sealing element is comprised of a ketone-based resin such as polyetheretherketone (PEEK).

FIG. 4 illustrates a preferred embodiment of the hydraulic tensioner 10 incorporating the sealing element 40. The tensioner 10 includes a housing 50 having a chamber 52 connected through a passageway 54 to a pressure fluid source (not shown). The fluid source may be an oil pump, oil reservoir or the like. Fluid enters the chamber formed by the bore 48 and hollow piston 56, as described below. Preferably, the chamber is cylindrical. The chamber 52 slidably receives a hollow piston 56, also preferably cylindrical, having an interior space 58, a lower end 60, a side wall 62, an upper end 64, a groove 66, and a sealing element 40. The lower end 60 is positioned inside the chamber 52. In a preferred embodiment, the upper end 64 contacts a tensioner face 90. The tensioner face 90 provides tension along the chain/belt (not shown). A spring 68 contacts the inside 70 of the upper end 64 of the piston 56 to bias the piston 56 in a protruding or outward direction.

In one embodiment of the tensioner, a check valve 92 is provided between the chamber 52 and the passageway 54, and thus the source of fluid pressure, to permit fluid flow into the chamber 52 while blocking fluid flow in the reverse direction. Preferably, a check valve 92 includes a ball and a spring biasing the ball toward a ball seat. In another embodiment, the check valve 92 may be a variable orifice check valve as shown and described in U.S. Patent No. 5,259,820 and u.S. Patent No. 5,277,664, both of which are owned by the assignee of the present application and both of which are incorporated herein by reference.

To control piston 56 to bore 48 or chamber 52 clearance, the sealing element 40 is positioned around the outside of the piston 56 and against the lateral wall of the chamber 52. The sealing element 40 is mounted in a groove 66 of the piston 56. The sealing element has a gap or a discontinuity 42 that allows fluid to flow along the outside of the piston from the chamber to the outside.

The sealing element 40 is preferably a seal ring with a discontinuity 42. The discontinuity 42 of the sealing element 40 allows for fluid to leak from the lower end 60 to the upper end 62 of the piston 56. Fluid therefore leaks from the fluid chamber 52 through the discontinuity 42 of sealing element 40.

The hydraulic tensioner of the present invention maintains chain tension in an automotive application as follows. Movement of the piston outward creates a pressure differential in the chamber such that the check valve 92 opens and fluid flows into the chamber 52. As the fluid fills the chamber 52, the piston 56 is moved outward by the force of the pressurized fluid and the spring 68. The piston 56 continues to move outward until the inward force of the chain on the piston 56 balances the outward force of the spring 68 and fluid. At this point, the check valve 92 closes and prevents further fluid flow.

When the chain slackens due to wear or load fluctuations, the piston 56 moves outward again and the valve opens to allow more fluid to flow into the chamber 52. During the period in which the piston force and chain force are balanced, no fluid flow occurs with the exception of leakage through the discontinuity 42 in the sealing element 40. By precisely defining the discontinuity 42, the piston 56 can be sealed against the bore 48 and a controlled amount of fluid can escape through the discontinuity 42 of the sealing element 40 to provide a pressure relief mechanism.

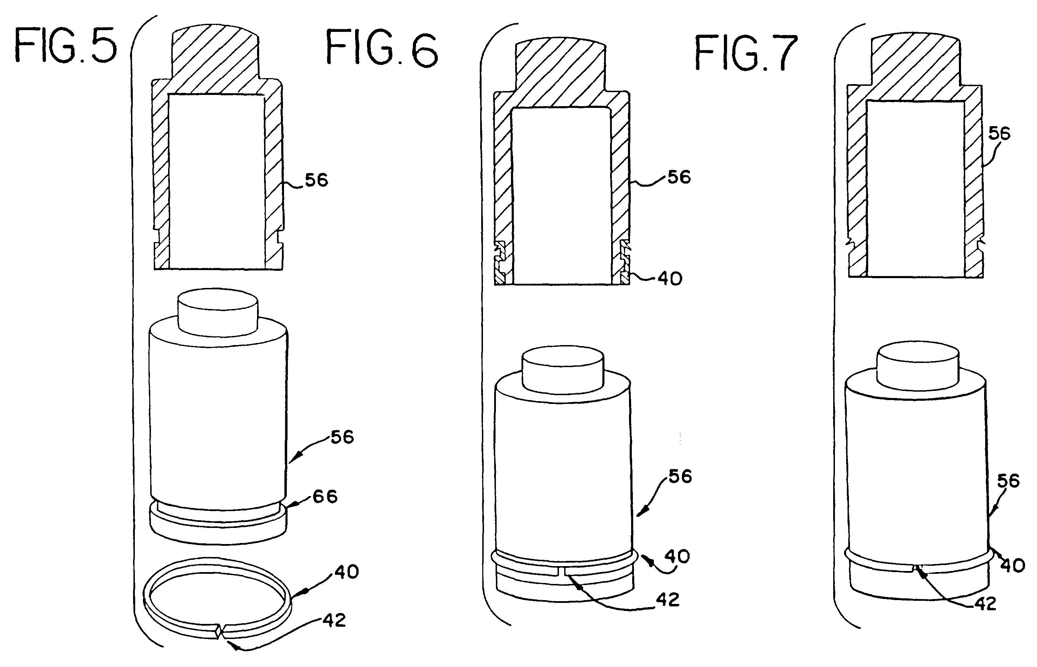

FIGS. 5, 6 and 7 illustrate different embodiments of the placement of the sealing element 40 into the groove 66 of the piston 56. In one embodiment, as shown in FIG. 5, the plastic sealing element 40 and the plastic piston 56 are manufactured through separate injection molding processes. The sealing element 40 is then placed onto the piston 56 during assembly of the tensioner. In another embodiment, as shown in FIG. 6, the plastic sealing element 40 and the plastic piston 56 are again manufactured initially through separate injection molding processes. The sealing element 40 is then molded onto the piston 56 during assembly of the tensioner. In another embodiment, as shown in FIG. 7, the sealing element 40, with its discontinuity 42, are molded along with the piston 56 through a single injection molding process. Here, the sealing element 40 and the piston 56 are made of the same plastic material.

Those skilled in the art to which the invention pertains may make modifications and other embodiments employing the principles of this invention without departing from its spirit or essential characteristics, particularly upon considering the foregoing teachings. The described embodiments are to be considered in all respects only as illustrative and not restrictive and the scope of the invention is, therefore, indicated by the appended claims rather than by the foregoing description. Consequently, while the invention has been described with reference to particular embodiments, modifications of structure, sequence, materials and the like would be apparent to those skilled in the art, yet still fall within the scope of the invention.

## Claims

1. A hydraulic tensioner comprising:
a housing having a generally cylindrical bore;
a hollow piston slidably received within said bore to define a fluid chamber with said bore, said piston having an upper and lower end;
a spring biasing said piston in the protruding direction from said housing;
a check valve to permit the flow of fluid from an external source through the valve and into said fluid chamber; and
a sealing element positioned between said piston and the inner lateral wall of said bore, said sealing element being constructed to permit the passage of fluid from said lower end to said upper end of said piston, said sealing element being of plastic material manufactured through an injection molding process.

2. The hydraulic tensioner of claim 1 wherein said piston is of plastic material manufactured through an injection molding process.

3. The hydraulic tensioner of claim 1 wherein said housing is of plastic material manufactured through an injection molding process.

4. The hydraulic tensioner of claim 2 wherein said sealing element is integrally formed with said piston.

5. The hydraulic tensioner of claim 3 wherein said sealing element is integrally formed with said piston.

6. The hydraulic tensioner of claim 1 wherein
said housing comprises a first plastic material; and
said piston comprises a second plastic material.

7. The hydraulic tensioner of claim 6 wherein said sealing element comprises a third plastic material.

8. The hydraulic tensioner of claim 6 wherein said second plastic material comprises nylon 4/6.

9. The hydraulic tensioner of claim 6 wherein said first plastic material comprises polyphenylene sulfide with glass filler.

10. The hydraulic tensioner of claim 7 wherein said third plastic material comprises polyetheretherketone.
